# EUROPÄISCHE PATENTSCHRIFT

(11) **EP 3 427 180 B1**
(45) Veröffentlichungstag und Bekanntmachung des Hinweises auf die Patenterteilung: **25.11.2020**
(21) Anmeldenummer: 17706715.4
(22) Anmeldetag: 20.02.2017
(51) Int. Cl.: G06K 7/10

(54) **VERFAHREN ZUM ERKENNEN EINES IDENTIFIKATIONSMEDIUMS IN EINEM KOMMUNIKATIONSBEREICH EINER ANTENNE**
METHOD FOR DETECTING AN IDENTIFICATION MEDIUM IN A COMMUNICATION RANGE OF AN ANTENNA
PROCÉDÉ DE DÉTECTION D'UN MOYEN D'IDENTIFICATION DANS UNE ZONE DE COMMUNICATION D'UNE ANTENNE

(30) Priorität: 09.03.2016 DE 102016002871
(43) Veröffentlichungstag der Anmeldung: 16.01.2019
(73) Patentinhaber: HUF Hülsbeck & Fürst GmbH & Co. KG, 42551 Velbert (DE)
(72) Erfinder: BEXTERMÖLLER, Hubert, 45468 Mülheim (DE); STUMMVOLL, Armin, 73110 Hattenhofen (DE)
(74) Vertreter: Zenz Patentanwälte Partnerschaft mbB
(86) Internationale Anmeldenummer: PCT/EP2017/053781
(87) Internationale Veröffentlichungsnummer: WO 2017/153156

(56) Entgegenhaltungen:
- EP-A1- 1 459 240
- EP-A1- 2 602 942
- EP-B1- 1 723 575
- US-A1- 2014 106 669

## Beschreibung

Die Erfindung betrifft ein Verfahren zum Erkennen eines Identifikationsmediums in einem Kommunikationsbereich einer Antenne einer Nahfeldkommunikations-Schreib- /Leseeinheit zum Senden und Empfangen von Hochfrequenzsignalen gemäß dem Oberbegriff des Anspruchs 1.

Aus dem Stand der Technik ist, wie in EP 1 723 575 B1 beschrieben, ein Verfahren zum Erkennen von Identifikationsmedien im Kommunikationsbereich einer Antenne zum Senden und Empfangen von HF-Signalen eines Schreib/ Lesegeräts, welches nach dem Prinzip der induktiven Kopplung eines HF-Feldes im MHz Frequenzbereich arbeitet, bekannt. Das Schreib/Lesegerät weist einen direkt mit der Antenne verbundenen Sendepfad, einen direkt mit der Antenne verbundenen Empfangspfad, eine Schaltung zur HF-Kommunikation mit einer Standard Sendeleistung oder kleiner und eine logische Schaltung zum Auswerten einer Kommunikation zwischen dem Schreib/Lesegerät und einem Identifikationsmedium auf, wobei über den Sendepfad und die Antenne periodisch ein kurzes Abfragesignal, welches mehrere Grundschwingungen des HF-Feldes enthält, mit der Standard Sendeleistung ausgesendet wird. Dabei wird während dem Aussenden des Abfragesignals nach einer definierten zeitlichen Verzögerung ab dem Beginn des Aussendens des Abfragesignals eine Signaländerung mit mehreren Grundschwingungen des HF-Feldes an der Antenne detektiert. Anschließend wird die nach der definierten zeitlichen Verzögerung detektierte Signaländerung mit einem Referenzsignal verglichen und ein Kommunikationssignal zum Erkennen eines Identifikationsmediums ausgesandt, falls sich die nach der definierten zeitlichen Verzögerung detektierte Signaländerung vom Referenzsignal unterscheidet.

Der Erfindung liegt die Aufgabe zu Grunde, ein gegenüber dem Stand der Technik verbessertes Verfahren zum Erkennen eines Identifikationsmediums in einem Kommunikationsbereich einer Antenne einer Nahfeldkommunikations-Schreib- /Leseeinheit zum Senden und Empfangen von Hochfrequenzsignalen anzugeben.

Die Aufgabe wird erfindungsgemäß mit den in Anspruch 1 angegebenen Merkmalen gelöst.

Vorteilhafte Ausgestaltungen der Erfindung sind Gegenstand der Unteransprüche.

Bei einem Verfahren zum Erkennen eines Identifikationsmediums in einem Kommunikationsbereich einer Antenne einer Nahfeldkommunikations-Schreib- /Leseeinheit zum Senden und Empfangen von Hochfrequenzsignalen wird über einen mit der Antenne verbundenen Sendepfad und die Antenne periodisch ein Abfragesignal mit einem vorgegebenen Leistungswert ausgesendet. Weiterhin wird nach einer definierten zeitlichen Verzögerung ab dem Beginn des Aussendens des Abfragesignals eine Signaländerung an der Antenne erfasst und die erfasste Signaländerung mit mindestens einem Referenzsignal verglichen. Anschließend wird ein Kommunikationssignal zum Erkennen eines Identifikationsmediums gesendet, wenn sich die erfasste Signaländerung vom mindestens einen Referenzsignal unterscheidet.

Erfindungsgemäß ist vorgesehen, dass die Signaländerung an mindestens zwei unterschiedlich abgestrahlten Signalen erfasst und ausgewertet wird, wobei die Signaländerung mit zwei unterschiedlichen Amplituden und/oder Phasen abgetastet und anschließend mit zwei unterschiedlichen Referenzsignalen verglichen wird. Das Kommunikationssignal zum Erkennen des Identifikationsmediums wird dann gesendet, wenn die erfasste Signaländerung zwei vorgegebene Auslöseschwellen unterschreitet.

Das erfindungsgemäße Verfahren ermöglicht das sichere Erkennen eines Identifikationsmediums im Kommunikationsbereich der Antenne und anschließendem Kommunikationsaufbau mit minimalem Energieaufwand. Mittels der Abtastung der Signaländerung mit mindestens zwei unterschiedlichen Amplituden und/oder Phasen kann eine Auslöseschwelle gegenüber dem Stand der Technik bei gleichzeitigem Filtern eines Bitrauschens reduziert werden. Damit ist das Risiko eines unnötigen, weil nutzlosen Kommunikationsaufbaus der Nahfeldkommunikations-Schreib-/Leseeinheit verringert. Ein Datenaustausch zwischen der Nahfeldkommunikations-Schreib-/Leseeinheit im Kommunikationsbereich erfolgt hierbei mittels sogenannter Nahfeldkommunikation (engl.: Near Field Communication), welcher einen auf induktiver Kopplung basierenden Übertragungsstandard darstellt.

Ausführungsbeispiele der Erfindung werden im Folgenden anhand von Zeichnungen näher erläutert.

Dabei zeigen:
Fig. 1 schematisch eine Vorrichtung zur Durchführung eines erfindungsgemäßen Verfahrens zum Erkennen eines Identifikationsmediums in einem Kommunikationsbereich einer Antenne einer NFC-Schreib-/Leseeinheit zum Senden und Empfangen von Hochfrequenzsignalen,
Fig. 2 ein Amplituden-Zeit-Diagramm mit zwei Referenzsignalen und einer Anzahl von Stützstellen und
Fig. 3 ein Verfahrensablaufdiagramm des erfindungsgemäßen Verfahrens.

Einander entsprechende Teile sind in allen Figuren mit den gleichen Bezugszeichen versehen.

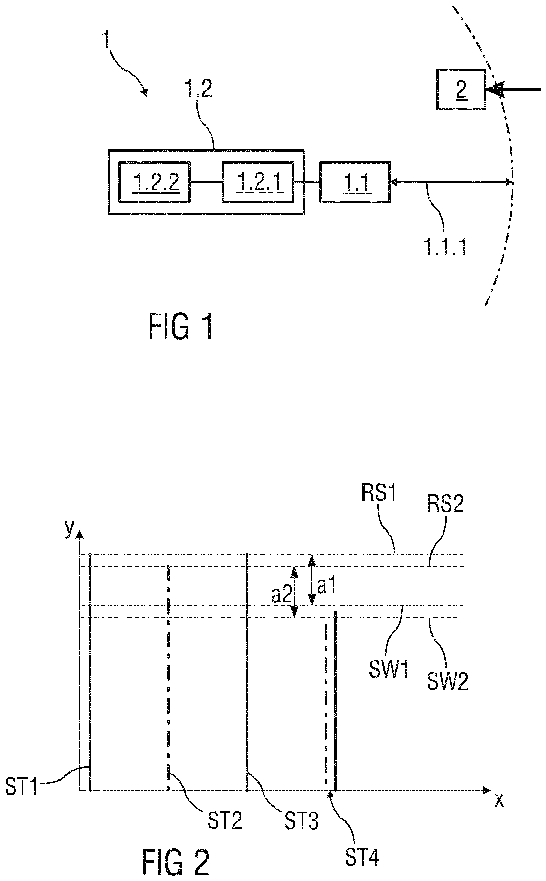

Figur 1 zeigt schematisch eine Vorrichtung 1 zur Durchführung eines erfindungsgemäßen Verfahrens zum Erkennen eines Identifikationsmediums 2 in einem Kommunikationsbereich 1.1.1 einer Antenne 1.1 einer Nahfeldkommunikations-Schreib-/Leseeinheit 1.2 zum Senden und Empfangen von Hochfrequenzsignalen.

Die Vorrichtung 1 ist in ihrem Grundaufbau gemäß dem in der eingangs genannten EP 1 723 575 B1 gezeigten Schreib/Lesegerät ausgebildet, so dass Details einzelner Vorrichtungskomponenten, die nicht erfindungsrelevant sind, der Beschreibung aus der EP 1 723 575 B1 entnommen werden können.

Die Vorrichtung 1 umfasst die Nahfeldkommunikations-Schreib-/Leseeinheit 1.2, die mit der Antenne 1.1 zum Senden und Empfangen von Hochfrequenzsignalen verbunden ist. Die Nahfeldkommunikations-Schreib-/Leseeinheit 1.2 umfasst zur Kommunikation eine Schaltung 1.2.1 und zur Auswertung der Kommunikation eine logische Schaltung 1.2.2.

Zum Erkennen eines in den Kommunikationsbereich 1.1.1 eintretenden Identifikationsmediums 2, wie es das vorliegende Ausführungsbeispiel beispielhaft zeigt, wird über einen nicht näher dargestellten Sendepfad und die Antenne 1.1 periodisch ein Abfragesignal mit einem vorgegebenen Amplitudenwert oder Leistungswert gesendet. Insbesondere wird das Abfragesignal bei jedem Aussenden mit einem abwechselnd anderen Leistungswert ausgesendet, wobei zwischen zwei unterschiedlichen Leistungswerten umgeschaltet wird.

Während des Sendens des Abfragesignals wird mittels der Antenne 1.1 eine Signaländerung zu mehreren Zeitpunkten, insbesondere zu mindestens zwei Zeitpunkten, nach dem Senden des Abfragesignals erfasst. Die Signaländerung wird in Abhängigkeit des Leistungswertes, mit welchem das Abfragesignal versendet wurde, mit zwei unterschiedlichen Amplituden und/oder Phasen abgetastet, so dass ein mögliches Bitrauschen gefiltert werden kann. Es findet solange keine Überabtastung statt, solange keine Auslösung stattgefunden hat.

Dadurch, dass die Abtastung mit zwei unterschiedlichen Amplituden und/oder Phasen durchgeführt wird, sind zwei verschiedene Referenzsignale RS1, RS2 (gezeigt in Figur 2) vorgesehen, mit denen die erfasste Signaländerung verglichen wird, wie es in Figur 2 näher beschrieben wird. Unterschreiten die Abtastwerte der Signaländerung die Amplituden beider Referenzsignale RS1, RS2 um einen bestimmten Faktor zu einem bestimmten Zeitpunkt oder in einem bestimmten vorgegebenen Zeitraum, so wird ein Kommunikationssignal an das Identifikationsmedium 2 gesendet. Wird mit dem Kommunikationssignal ein berechtigtes Identifikationsmedium 2 festgestellt und authentifiziert, so erfolgt eine Kommunikation zwischen der Nahfeldkommunikations- Schreib-/Leseeinheit 1.2 und dem Identifikationsmedium 2. Ebenfalls ist auch ein Überschreiten einer Schwelle als Auslösung denkbar, da es auch aktive Geräte gibt, die Leistung in das System einkoppeln.

Figur 2 zeigt zur weiteren Erläuterung des erfindungsgemäßen Verfahrens ein Amplituden-Zeit-Diagramm mit einer die Zeit repräsentierenden Abszisse x und einer Amplitudenwerte repräsentierenden Ordinate y.

Im Diagramm sind in gestrichelter Form die Amplituden der Referenzsignale RS1, RS2 sowie Amplitudenwerte für Auslöseschwellen SW1, SW2 aufgezeichnet.

Ein oberes Referenzsignal RS1 weist dabei einen größeren Amplitudenwert oder Leistungswert als ein unteres Referenzsignal RS2 auf. Weiterhin weist eine obere Auslöseschwelle SW1 einen höheren Amplitudenwert auf als eine untere Auslöseschwelle SW2. Das obere Referenzsignal RS1 ist dabei zur oberen Auslöseschwelle SW1 mit einem ersten Abstand a1 und das untere Referenzsignal RS2 zur unteren Auslöseschwelle SW2 mit einem zweiten Abstand a2 angeordnet. Die Abstände a1, a2 stellen hierbei jeweils eine Mindeständerung für eine Auslösung zur Aussendung eines Kommunikationssignals dar.

Wie bereits in Figur 1 erwähnt, wird das Abfragesignal periodisch oder nicht periodisch gesendet. Die Abfrage kann in beliebigen Abständen statt. Dadurch, dass bei jedem Aussenden das Abfragesignal mit einem anderen Leistungswert ausgesendet und dabei zwischen zwei unterschiedlichen Leistungswerten umgeschaltet wird, erfolgt der Abgleich der Signaländerung mit einem der Referenzsignale RS1, RS2 in Abhängigkeit des Leistungswertes oder Amplitudenwertes, mit welchem das Abfragesignal versendet wurde. Ist die Abfrage periodisch, ist ein optimales Verhältnis zwischen Abfrageanzahl und garantierte Antwortzeit gegeben.

Die Abtastung mit den verschiedenen Amplituden und/oder Phasen erfolgt dabei zeitlich versetzt. Dies ist im vorliegenden Ausführungsbeispiel mittels mehrerer Stützstellen ST1 bis ST4 verdeutlicht, die jeweils einen Abtastvorgang der Signaländerung darstellen. Beispielsweise erfolgt eine Abtastung der Signaländerung mit einer ersten Amplitude und/oder Phase (dargestellt mittels Stützstelle ST1), wenn das Abfragesignal mit einem hohen Leistungswert gesendet wurde. Ein Abtastwert wird dann mit dem oberen Referenzsignal RS1 verglichen. Eine zeitlich dazu versetzte Abtastung der Signaländerung erfolgt mit einer zweiten Amplitude und/oder Phase (dargestellt mittels Stützstelle ST2), wenn das Abfragesignal mit einem niedrigen Leistungswert gesendet wurde. Ein Abtastwert der Signaländerung wird dann mit dem unteren Referenzsignal RS2 verglichen usw.

Zwischen den Stützstellen ST1 bis ST4 ist beispielsweise jeweils ein zeitlicher Abstand von 100 Millisekunden, wobei die letzte hier gezeigte Stützstelle ST4 eine sogenannte Multistützstelle darstellt, bei der ein zeitlicher Abstand zwischen der Abtastung der Signaländerung mit den unterschiedlichen Amplituden und/oder Phasen wesentlich geringer ist. Dabei wird an dieser Multistützstelle entschieden, ob das Senden eines Kommunikationssignals erfolgt oder nicht. Das Kommunikationssignal wird insbesondere dann gesendet, wenn die Abtastwerte der Signaländerung an der Multistützstelle die entsprechende Auslöseschwelle SW1, SW2 unterschreiten.

Zusätzlich ist es möglich, eine Anpassung der Amplitude und/oder Phase beim Abtasten einzustellen.

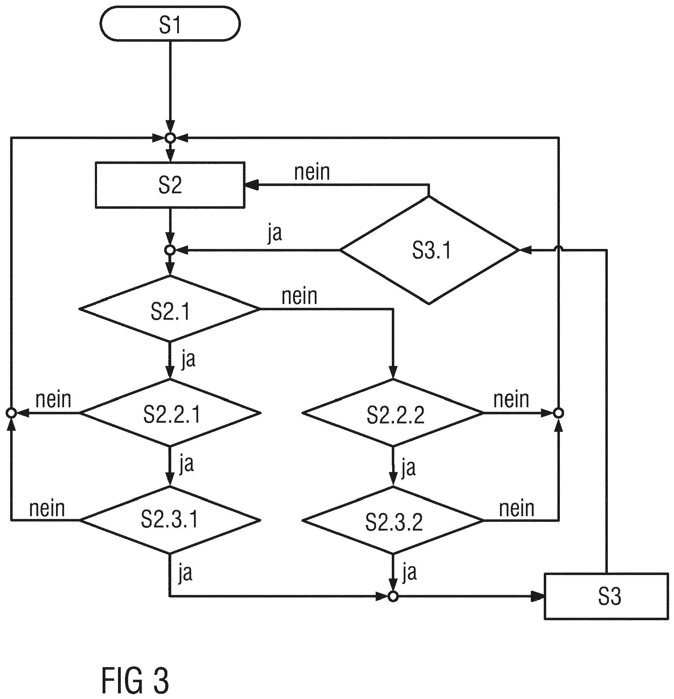

Zum besseren Verständnis zeigt Figur 3 ein Verfahrensablaufdiagramm zur Durchführung des erfindungsgemäßen Verfahrens.

In einem ersten Schritt S1 wird das Verfahren zum Erkennen des Identifikationsmediums 2 gestartet. In einem zweiten Schritt S2 erfolgt die Anpassung von Amplitudenwerten für die Referenzsignale RS1, RS2.

Dabei wird in einem Teilschritt S2.1 eine Abfrage gestartet, mit welcher Amplitude und/oder Phase die Signaländerung abgetastet werden soll. Soll die Signaländerung mit der höheren Betriebsspannung abgetastet werden und somit folglich der Abtastwert mit dem oberen Referenzsignal RS1 verglichen werden, wird in einem weiteren Teilschritt S2.2.1 die Abfrage gestartet, ob der Abtastwert die obere Auslöseschwelle SW1 unterschritten hat.

Ergibt die Abfrage gemäß Teilschritt 2.2.1, dass der Abtastwert die obere Auslöseschwelle SW1 unterschritten hat, wird in einem darauffolgenden Teilschritt S2.3.1 überprüft, ob der Abtastwert mit der niedrigeren Betriebsspannung die untere Auslöseschwelle unterschritten hat. Ergibt die Abfrage gemäß Teilschritt 2.2.1, dass der Abtastwert die obere Auslöseschwelle SW1 nicht unterschritten hat, wird die Durchführung des Verfahrens zum zweiten Verfahrensschritt S2 zurückgeführt.

Ergibt die Abfrage gemäß Teilschritt S2.3.1, dass der Abtastwert mit der niedrigeren Betriebsspannung ebenfalls die untere Auslöseschwelle unterschritten hat, so erfolgt ein dritter Schritt S3, in welchem das Kommunikationssignal gesendet und somit eine Kommunikation mit dem Identifikationsmedium 2 aufgebaut wird. Ergibt die Abfrage gemäß Teilschritt S2.3.1, dass der Abtastwert mit der niedrigeren Betriebsspannung nicht die untere Auslöseschwelle SW2 unterschritten hat, wird die Durchführung des Verfahrens zum zweiten Verfahrensschritt S2 zurückgeführt.

Soll die Signaländerung gemäß Teilschritt S2.1 mit der niedrigeren Betriebsspannung abgetastet werden und somit folglich der Abtastwert mit dem unteren Referenzsignal RS2 verglichen werden, wird in einem anderen Teilschritt S2.2.2 die Abfrage gestartet, ob der Abtastwert die untere Auslöseschwelle SW2 unterschritten hat. Ist dies der Fall, so erfolgt ein weiterer anderer Teilschritt S2.3.2, in welchem eine Abfrage erfolgt, ob der Abtastwert mit der höheren Betriebsspannung die obere Auslöseschwelle SW1 unterschritten hat. Ergibt die Abfrage gemäß Teilschritt 2.2.2, dass der Abtastwert die untere Auslöseschwelle SW2 nicht unterschritten hat, wird die Durchführung des Verfahrens zum zweiten Verfahrensschritt S2 zurückgeführt.

Ergibt die Abfrage gemäß Teilschritt S2.3.2, dass der Abtastwert mit der höheren Betriebsspannung ebenfalls die obere Auslöseschwelle SW1 unterschritten hat, so erfolgt der dritte Schritt S3, in welchem das Kommunikationssignal gesendet und somit eine Kommunikation mit dem Identifikationsmedium 2 aufgebaut wird. Ergibt die Abfrage gemäß Teilschritt S2.3.2, dass der Abtastwert mit der niedrigeren Betriebsspannung nicht die obere Auslöseschwelle SW1 unterschritten hat, wird die Durchführung des Verfahrens zum zweiten Verfahrensschritt S2 zurückgeführt.

Somit werden in Abhängigkeit des Leistungswertes oder Amplitudenwertes des gesendeten Abfragesignals die Abtastwerte der Signaländerung mit den entsprechenden Referenzsignalen RS1, RS2 verglichen.

Ist eine Kommunikation gemäß dem dritten Schritt S3 aufgebaut, wird in einem Teilschritt S3.1 überprüft, ob beispielsweise in den letzten 100 Pulsen ein Referenzwert angepasst wurde. Ist dies der Fall, wird das Verfahren zum Teilschritt S2.1 zurückgeführt. Ist dies nicht der Fall, wird das Verfahren zum zweiten Schritt S2 zurückgeführt. Diese langsame Anpassung der Referenzwerte bei erfolgreichem Kommunikationsaufbau ermöglicht einen Schutz gegen Missbrauch und somit gegen Störimpulse im Kommunikationsbereich 1.1.1 der Antenne 1.1.

Die Anpassung der Referenzsignale RS1, RS2, insbesondere der Amplitudenwerte der Referenzsignale RS1, RS2, erfolgt zeitversetzt mittels eines Algorithmus. Beispielsweise wird beim Start des Algorithmus zum Setzen eines Amplitudenwerts für eines der Referenzsignale RS1, RS2 der älteste Wert in einem 7-fach Ringpuffer (Datenstruktur) ersetzt. Ein neuer Amplitudenwert für eines der Referenzsignale RS1, RS2 ist dann die Summe der ältesten vier Daten des Ringpuffers subtrahiert mit zwei.

Dadurch, dass nur die letzten vier Werte in den angepassten Amplitudenwert des entsprechenden Referenzsignals RS1, RS2 einfließen, wird dieser Amplitudenwert mit nur einer Verzögerungsstufe (engl. delay) verändert. Dies ermöglicht dem Identifikationsmedium 2 einen Kommunikationsaufbau auch dann, wenn es zuvor beispielsweise in einem anderen Betriebsmodus war, in welchem ein Kommunikationsaufbau mit der Vorrichtung 1 nicht möglich war. Die Subtraktion von zwei vom Amplitudenwert führt vorzugsweise dazu, dass ein einfaches Bitrauschen nicht zum Aufbau einer Nahfeldkommunikation führt.

Des Weiteren wird beim Überprüfen einer der Auslöseschwellen SW1, SW2 beispielsweise der aktuelle Abtastwert der Signaländerung mit dem Faktor vier multipliziert. Anschließend wird das Produkt aus Signaländerung und Faktor mit dem angepassten Amplitudenwert des entsprechenden Referenzsignals RS1, RS2 verglichen.

## Patentansprüche

1. Verfahren zum Erkennen eines Identifikationsmediums (2) in einem Kommunikationsbereich (1.1.1) einer Antenne (1.1) einer Nahfeldkommunikations-Schreib-/Leseeinheit (1.2) zum Senden und Empfangen von Hochfrequenzsignalen, wobei
- über einen mit der Antenne (1.1) verbundenen Sendepfad und die Antenne (1.1) ein Abfragesignal mit einem vorgegebenen Leistungswert ausgesendet wird,
- nach einer definierten ersten zeitlichen Verzögerung ab dem Beginn des Aussendens des Abfragesignals eine erste Signaländerung gegenüber einem ersten Referenzsignal an der Antenne (1.1) abgetastet wird und die abgetastete Signaländerung in Amplitude und/oder Phase mit mindestens einer dem ersten Referenzsignal (RS1) zugeordneten Amplitude oder Phase verglichen wird,
**dadurch gekennzeichnet, dass**
- nach einer definierten zweiten zeitlichen Verzögerung ab dem Beginn des Aussendens des Abfragesignals eine zweite Signaländerung gegenüber einem zweiten Referenzsignal an der Antenne (1.1) abgetastet wird und die abgetastete zweite Signaländerung in Amplitude und/oder Phase mit mindestens einer dem zweiten Referenzsignal (RS2) zugeordneten Amplitude oder Phase verglichen wird,
wobei die mindestens zwei Signaländerungen mit unterschiedlichen Amplituden und/oder Phasen abgetastet werden, und
- wobei
- entweder ein Kommunikationssignal zum Aufbau einer Kommunikation mit einem Identifikationsmediums (2) gesendet wird, wenn sich die wenigstens zwei abgetasteten Signaländerungen von dem jeweils zugeordneten Referenzsignal (RS1, RS2) um jeweils vorgegebene Auslöseschwellen unterscheiden,
- oder andernfalls das Abfragesignal zum Erkennen des Identifikationsmediums (2) mit anderer Amplitude und/oder Phase wiederholt ausgesendet wird.

2. Verfahren nach Anspruch 1, **dadurch gekennzeichnet, dass** die Referenzsignale (RS1, RS2) mittels eines Algorithmus mit einem zeitlichem Versatz an die Signaländerung angepasst werden.

3. Verfahren nach Anspruch 1 oder 2, **dadurch gekennzeichnet**, das Abfragesignal bei jedem Aussenden mit einem anderen Leistungswert ausgesendet wird, wobei zwischen zumindest zwei unterschiedlichen Leistungswerten umgeschaltet wird.

4. Verfahren nach einem der vorhergehenden Ansprüche, **dadurch gekennzeichnet**, das Abfragesignal bei jedem Aussenden mit einem anderen Amplituden oder Phasen ausgesendet wird, wobei zwischen zumindest zwei unterschiedlichen Amplituden oder Phasen umgeschaltet wird.

## Claims

1. Method for detecting an identification medium (2) in a communication area (1.1.1) of an antenna (1.1) of a near-field communication read/write unit (1.2) for transmitting and receiving radio frequency signals, wherein
- an interrogation signal with a specified power value is transmitted via a transmission path connected to the antenna (1.1) and the antenna (1.1),
- after a defined first time delay from the start of transmission of the interrogation signal, a first signal change with respect to a first reference signal is sampled at the antenna (1.1) and the sampled signal change is compared in amplitude and/or phase with at least one amplitude or phase assigned to the first reference signal (RS1),
**characterized in that**
- after a defined second time delay from the beginning of the transmission of the interrogation signal, a second signal change with respect to a second reference signal is sampled at the antenna (1.1) and the sampled second signal change is compared in amplitude and/or phase with at least one amplitude or phase assigned to the second reference signal (RS2), wherein the at least two signal changes are sampled with different amplitudes and/or phases, and
- wherein
- either a communication signal is transmitted to establish communication with an identification medium (2) if the at least two sampled signal changes differ from the respectively assigned reference signal (RS1, RS2) by respectively predetermined trigger thresholds
- or otherwise the interrogation signal for detecting the identification medium (2) is repeatedly transmitted with a different amplitude and/or phase.

2. Method according to claim 1, **characterized in that** the reference signals (RS1, RS2) are adapted to the signal change by means of an algorithm with a time offset.

3. Method according to any of claims 1 or 2, **characterized in that** the interrogation signal is transmitted with a different power value each time it is transmitted, switching between at least two different power values.

4. Method according to one of the preceding claims, **characterized in that** the interrogation signal is transmitted with a different amplitude or phase each time it is transmitted, switching between at least two different amplitudes or phases.

## Revendications

1. Une procédure pour détecter un support d'identification (2) dans une zone de communication (1.1.1) d'une antenne (1.1) d'une unité de lecture/écriture de communication en champ proche (1.2) pour l'émission et la réception de signaux de radiofréquence, dans laquelle
- un signal d'interrogation avec une valeur de puissance prédéterminée est transmis par un chemin de transmission connecté à l'antenne (1.1) et par l'antenne (1.1),
- après un premier délai défini à partir du début de la transmission du signal d'interrogation, un premier changement de signal par rapport à un premier signal de référence est échantillonné au niveau de l'antenne (1.1) et le changement de signal échantillonné est comparé en amplitude et/ou en phase avec au moins une amplitude ou une phase attribuée au premier signal de référence (RS1),
**caractérisé en ce que**
- après un deuxième délai défini à partir du début de la transmission du signal d'interrogation, un deuxième changement de signal par rapport à un deuxième signal de référence est échantillonnée au niveau de l'antenne (1.1) et le deuxième changement de signal échantillonné est comparée en amplitude et/ou en phase avec au moins une amplitude ou une phase attribuée au deuxième signal de référence (RS2),
dans laquelle les deux changements de signal sont échantillonnés avec des amplitudes et/ou des phases différentes, et
- dans laquelle
- soit un signal de communication est transmis pour établir la communication avec un support d'identification (2) dans le cas où les deux changements de signal échantillonnés diffèrent du signal de référence respectivement attribué (RS1, RS2) par des seuils de déclenchement respectivement prédéterminés,
- ou bien le signal d'interrogation pour la détection du support d'identification (2) est transmis de manière répétée avec une amplitude et/ou une phase différente.

2. Procédure selon la revendication 1, **caractérisé en ce que** les signaux de référence (RS1, RS2) sont adaptés au changement de signal au moyen d'un algorithme avec un décalage temporel.

3. Procédure selon la revendication 1 ou 2, **caractérisé en ce que** le signal d'interrogation est transmis avec une valeur de puissance différente à chaque fois qu'il est transmis, en commutant entre au moins deux valeurs de puissance différentes.

4. Procédure selon l'une des revendications précédentes, **caractérisée en ce que** le signal d'interrogation est transmis avec une amplitude ou une phase différente chaque fois qu'il est transmis, en commutant entre au moins deux amplitudes ou phases différentes.
